# FASCICULE DE BREVET EUROPEEN

(11) **EP 3 074 597 B1**
(45) Date de publication et mention de la délivrance du brevet: **23.09.2020**
(21) Numéro de dépôt: 14821738.3
(22) Date de dépôt: 25.11.2014
(51) Int. Cl.: F01D 5/02, F02C 7/36

(54) **TURBOMACHINE COMPRENANT UN FOURREAU D'ARBRE ET TUBE DE FOURREAU ASSOCIÉ**
TURBOMASCHINE MIT EINER WELLENMUFFE UND ZUGEHÖRIGE MUFFENRÖHRE
TURBOMACHINE COMPRISING A SHAFT SLEEVE AND ASSOCIATED SLEEVE TUBE

(30) Priorité: 25.11.2013 FR 1361593
(43) Date de publication de la demande: 05.10.2016
(73) Titulaire: Safran Aircraft Engines, 75015 Paris (FR)
(72) Inventeur: JUDET, Maurice Guy, F-77550 Moissy-Cramayel Cedex (FR); ALIROT, Cécile Marie Emilienne, F-77550 Moissy-Cramayel Cedex (FR); BOSSAERT, Alexandre Xavier, F-77550 Moissy-Cramayel Cedex (FR); GARIN, Fabrice Marcel Noël, F-77550 Moissy-Cramayel Cedex (FR); GOSSELIN, Christian Michel Jacques, F-77550 Moissy-Cramayel Cedex (FR); THOMAS, Axel Sylvain Loïc, F-77550 Moissy-Cramayel Cedex (FR)
(74) Mandataire: Regimbeau
(86) Numéro de dépôt international: PCT/FR2014/053022
(87) Numéro de publication internationale: WO 2015/075405

(56) Documents cités:
- EP-A1- 0 651 137
- EP-A1- 0 987 457
- WO-A1-2009/144300
- WO-A1-2010/102995
- FR-A1- 2 981 124
- GB-A- 2 326 679
- US-A- 4 190 398

## Description

### DOMAINE TECHNIQUE GENERAL

La présente invention concerne le domaine des turbomachines. Plus particulièrement, la présente invention se rapporte à une turbomachine comprenant un fourreau s'étendant autour d'un arbre.

### ETAT DE L'ART

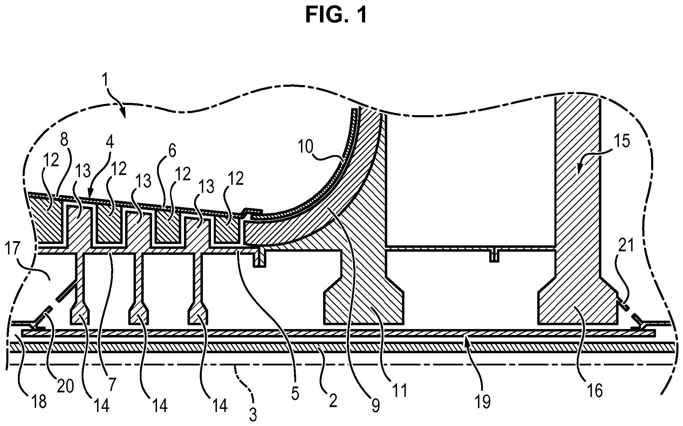

Une turbomachine 1 selon l'art antérieur est représentée à la figure 1. La turbomachine 1 comporte un arbre basse pression 2 s'étendant selon un axe 3 de la turbomachine définissant un axe de rotation de l'arbre basse pression 2. L'arbre basse pression 2 est relié en amont par rapport au sens de l'écoulement du flux d'air dans la turbomachine 1 à un compresseur basse pression (non représenté), et en aval à une turbine basse pression (non représentée) qui l'entraîne en rotation.

La turbomachine 1 comporte en outre, en amont, un compresseur haute pression 4 disposé autour de l'arbre basse pression 2 de manière coaxiale. Le compresseur haute pression 4 est un compresseur axialo-centrifuge.

Le compresseur haute pression 4 comporte un rotor 5 et un stator 6 formant une veine à travers laquelle l'air s'écoule. Le rotor 5 et le stator 6 présentent chacun une portion axiale, respectivement 7 et 8, et une portion épanouie, respectivement 9 et 10. La portion épanouie 9 du rotor 5 est le rouet. Le rouet 9 comporte un disque 11 mobile en rotation autour de l'axe 3 de la turbomachine.

Des aubes fixes 12 et des aubes mobiles 13 sont positionnées dans la veine d'écoulement d'air. Les aubes fixes 12 sont reliées au stator 6. Les aubes mobiles 13 sont chacune reliées à un disque 14. Les disques 14 sont reliés au rotor 5 et sont mobiles en rotation autour de l'axe 3 de la turbomachine.

La turbomachine 1 comporte également, en aval, une turbine haute pression 15 disposée autour de l'arbre basse pression 2 de manière coaxiale. La turbine haute pression 15 comporte au moins un étage muni d'un disque 16 mobile en rotation autour de l'axe 3. Le disque 16 de la turbine haute pression 15 est relié au disque 11 du rouet 9 et donc au rotor 5.

Le circuit entre l'arbre basse pression 2 et le rotor 5, aussi appelé circuit inter arbre, est soumis à des contraintes de températures très élevées dues à l'écoulement de l'air à travers le compresseur haute pression 4 et la turbine haute pression 15.

Il est classique, pour baisser la température dans le circuit inter arbre, de mettre en place un circuit 17 de refroidissement le traversant, de sorte que de l'air frais prélevé à l'extérieur de la turbomachine 1 s'écoule à travers le circuit inter arbre, et augmente le gradient de température entre le rotor 5 et l'arbre basse pression 2.

Les arbres de transmission de la turbomachine 1, notamment l'arbre basse pression 2, sont supportés et guidés par des paliers, logés dans des enceintes-palier, où ils sont alimentés en huile de lubrification.

Il est classique, pour assurer l'étanchéité des enceintes-palier et éviter que de l'huile de lubrification ne se répande dans le circuit inter arbre, de contrôler la pression dans les enceintes-palier au moyen d'un circuit 18 de pressurisation relié au circuit inter arbre.

Habituellement, la turbomachine 1 comporte en outre un fourreau 19 tubulaire s'étendant le long de l'arbre basse pression 2 selon l'axe 3 de la turbomachine. Le fourreau 19 est relié, en amont, au compresseur haute pression 4 au moyen d'un tourillon 20, et en aval, à la turbine haute pression 15 au moyen d'un tourillon 21.

Le fourreau 19 sépare le circuit 17 de refroidissement traversant le circuit inter arbre et le circuit 18 de pressurisation des enceintes-palier Ainsi, l'air s'écoule à travers le circuit 17 de refroidissement entre le fourreau 19 et le rotor 5 et à travers le circuit 18 de pressurisation entre le fourreau 19 et l'arbre basse pression 2 à des niveaux de pression distincts. Le fourreau 19 permet donc de préserver l'état thermique de l'arbre basse pression 2 d'une part, et d'assurer une pressurisation adéquate des enceintes-palier d'autre part.

En fonctionnement, le fourreau 19 est en rotation autour de l'axe 3 de l'arbre basse pression 2 et tourne en sens inverse de ce dernier.

A certaines vitesses de rotation, le fourreau 19 entre en résonance et vibre.

Ces vibrations constituent un risque important d'endommagement pour la turbomachine 1, lorsqu'elles interviennent dans la plage de fonctionnement de cette dernière.

C'est en particulier le cas de turbomachines 1 de petites dimensions dans lesquelles le diamètre du fourreau 19 est faible comparativement à sa longueur et pour lesquels la mise en résonance du fourreau 19 intervient dans la plage de fonctionnement de la turbomachine 1.

### PRESENTATION DE L'INVENTION

La présente invention a pour but de remédier aux problèmes décrits ci-dessus.

A cet effet, la présente invention a pour objet une turbomachine comprenant un étage de compresseur et un étage de turbine, chaque étage comprenant au moins un disque mobile en rotation autour d'un axe de la turbomachine, et un fourreau d'arbre tubulaire s'étendant selon l'axe de la turbomachine, comportant au moins une patte s'étendant depuis une surface radiale externe du fourreau et en regard du disque de l'étage de compresseur ou de l'étage de turbine, la patte étant configurée pour venir en contact avec le disque lorsque le fourreau est en rotation autour de l'axe de la turbomachine.

Une telle turbomachine a pour avantage de présenter des risques limités d'endommagements dus à des vibrations du fourreau.

Préférentiellement, la patte comprend une embase s'étendant sensiblement radialement depuis la surface radiale externe du fourreau et une partie de contact s'étendant depuis l'embase vers une extrémité libre de la patte, la partie de contact étant configurée pour se déformer élastiquement et venir en contact avec le disque lorsque le fourreau est en rotation autour de l'axe de la turbomachine.

Plus préférentiellement, la partie de contact est localement amincie dans une zone adjacente avec l'embase, dans laquelle la partie de contact comprend une surface externe s'étendant en regard du disque et formant, au niveau de l'extrémité libre de la patte, une première zone de contact destinée à venir en contact avec le disque sur une première plage de vitesses de rotation du fourreau, et dans laquelle la surface externe de la partie de contact comprend une première portion de surface définie par la première zone de contact, et une deuxième portion de surface, s'étendant dans le prolongement de la première portion de surface et étant décalée radialement vers le disque de manière à définir un sommet, ledit sommet formant une deuxième zone de contact destinée à venir en contact avec le disque sur une deuxième plage de vitesses de rotation du fourreau.

Selon un mode de réalisation de l'invention, la surface externe de la patte comprend une couche protectrice afin de limiter l'usure de la patte.

Selon un mode de réalisation de l'invention, la patte comprend une embase s'étendant sensiblement radialement depuis la surface radiale externe du fourreau, l'embase étant configurée pour venir en contact avec le disque lorsque le fourreau est en rotation autour de l'axe et se déforme radialement par rapport audit axe.

Selon un mode de réalisation de l'invention, la partie de contact s'étend sensiblement tangentiellement par rapport au fourreau. Selon une variante, la partie de contact s'étend parallèlement à l'axe de la turbomachine.

Selon un mode de réalisation de l'invention, le fourreau comporte un premier tube dont une extrémité coopère avec une extrémité d'un deuxième tube, la patte s'étendant à l'extrémité du premier tube, depuis une surface radiale externe dudit premier tube.

Selon un mode de réalisation de l'invention, le disque comporte une portée, la patte du fourreau étant configurée pour venir en contact avec la portée, lorsque le fourreau est en rotation autour de l'axe.

Les modes de réalisation de l'invention exposés précédemment peuvent avantageusement être combinés.

L'invention a également pour objet un fourreau d'arbre s'étendant selon un axe, le fourreau étant caractérisé en ce qu'il comporte au moins une patte s'étendant depuis une surface radiale externe du tube, et en ce que la patte est configurée pour venir en contact avec un disque d'un étage de compresseur ou de turbine d'une turbomachine telle que précédemment décrite, lorsque le fourreau est en rotation autour de l'axe.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 (déjà décrite) représente schématiquement, en coupe longitudinal, une vue partielle d'une turbomachine comprenant un fourreau de l'art antérieur ;
- La figure 2 représente schématiquement, en coupe longitudinal, une vue partielle d'une turbomachine comprenant un fourreau selon un mode de réalisation de l'invention ;
- La figure 2a représente une vue de détail du fourreau représenté à la figure 2;
- La figure 3 représente une vue en perspective du fourreau représenté à la figure 2 ;
- La figure 4 représente une vue de détail d'une patte du fourreau représenté à la figure 2.

### DESCRIPTION DETAILLEE

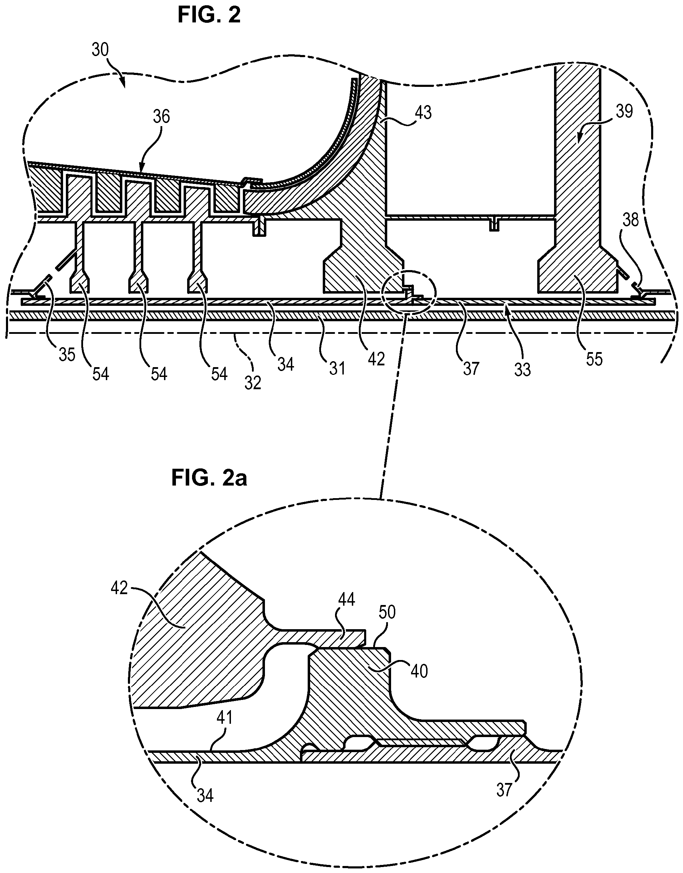

La figure 2 représente une vue partielle, en coupe longitudinale, d'une turbomachine 30 comportant un arbre basse pression 31 s'étendant selon un axe 32 de la turbomachine définissant un axe de rotation de l'arbre basse pression 31.

La turbomachine 30 comporte en outre un fourreau 33 s'étendant autour de l'arbre basse pression 31 selon l'axe 32 de la turbomachine.

Le fourreau 33 est en deux parties. Le fourreau 33 comporte un premier tube 34 dont une première extrémité est reliée à un tourillon 35 d'un compresseur haute pression 36. Le fourreau 33 comporte en outre un deuxième tube 37 dont une première extrémité est reliée à un tourillon 38 d'une turbine haute pression 39 et dont une deuxième extrémité est filetée et coopère avec un filetage complémentaire ménagé à l'intérieur d'une deuxième extrémité du premier tube 34.

Le fourreau 33 comporte au moins une patte 40 s'étendant depuis une surface radiale externe 41 du premier tube 34. Dans l'exemple présenté à la figure 2, la patte 40 est disposée à la deuxième extrémité du premier tube 34.

La patte 40 s'étend en regard d'un disque 42 relié à un rouet 43 du compresseur haute pression 36. Le disque 42 du rouet 43 comporte une portée annulaire 44 s'étendant parallèlement à l'axe 32 de la turbomachine depuis le disque 42 du rouet 43. La portée annulaire 44 comporte une surface interne en regard de laquelle la patte 40 s'étend. La patte 40 et la portée 44 sont particulièrement visibles sur la figure 2a.

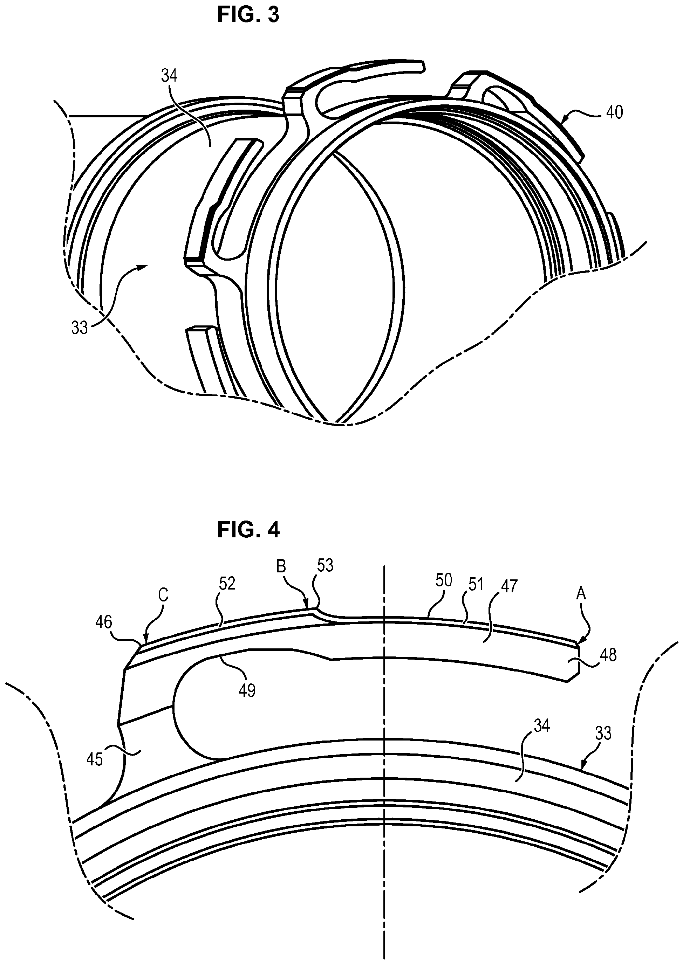

La figure 3 montre une vue en perspective du premier tube 34 du fourreau 33. Le fourreau 33 comporte plusieurs pattes 40 disposées sur toute la circonférence du premier tube 34. De préférence, une distance entre deux pattes 40 adjacentes est constante.

La figure 4 montre une vue de détail, en coupe transversale, du fourreau 33 où apparaît une patte 40.

La patte 40 a une forme générale de L. La patte 40 comporte une embase 45 s'étendant sensiblement radialement par rapport à l'axe 32 de la turbomachine, depuis la surface radiale externe 41 jusqu'à un sommet 46. La patte 40 comporte également une partie de contact 47 s'étendant depuis l'embase 45 vers une extrémité libre 48 de la patte 40.

Dans l'exemple présenté à la figure 4, la partie de contact 47 s'étend sensiblement parallèlement à la circonférence du premier tube 34. Selon une variante non représentée, la partie de contact 47 peut s'étendre sensiblement parallèlement à l'axe 32 de la turbomachine.

La partie de contact 47 est localement amincie dans une zone adjacente avec l'embase 45. La partie de contact 47 comprend une face interne 49 en regard de la surface radiale externe 41 du premier tube 34 présentant, entre la partie de contact 47 et l'embase 45, une forme concave, permettant d'augmenter la déformabilité de la partie de contact 47.

La partie de contact 47 comprend en outre une surface externe 50 s'étendant en regard du disque 42 du rouet 43. Plus précisément, la surface externe 50 s'étend en regard de la face interne de la portée annulaire 44 du disque 42 du rouet 43. La surface externe 50 de la partie de contact 47 forme, au niveau de l'extrémité libre 48 de la patte 40, une première portion de surface 51.

La surface externe 50 de la partie de contact 47 comprend une deuxième portion de surface 52, s'étendant dans le prolongement de la première portion de surface 51. La deuxième portion de surface 51 est décalée radialement vers le disque 42 du rouet 43 de manière à définir un sommet 53.

La première portion de surface 51 définit une première zone de contact A. La première zone de contact A est destinée à venir en contact avec le disque 42 du rouet 43 sur une première plage de vitesses de rotation du fourreau 33. Plus précisément, la première zone de contact A est destinée à venir en contact avec la face interne de la portée annulaire 44 du disque 42 du rouet 43. La première zone de contact A de la partie de contact 47 reste en contact avec le disque 42 du rouet 43 de manière continue sur la première plage de vitesses de rotation du fourreau 33. La première plage de vitesses de rotation du fourreau 33 couvre de préférence des vitesses de rotation basses, proches de l'arrêt du fourreau 33. La première plage de vitesses de rotation du fourreau 33 comprend par exemple à des vitesses de rotation entre 8000 et 12000 tours/min.

Le sommet 53 de la surface externe 50 forme une deuxième zone de contact B destinée à venir en contact avec le disque 42 du rouet 43 sur une deuxième plage de vitesses de rotation du fourreau 33. Plus précisément, la deuxième zone de contact B est destinée à venir en contact avec la face interne de la portée annulaire 44 du disque 42 du rouet 43. La deuxième zone de contact B de la partie de contact 47 reste en contact avec le disque 42 du rouet 43 de manière continue sur la deuxième plage de vitesses de rotation du fourreau 33. La deuxième plage de vitesses de rotation du fourreau 33 comprend de préférence les vitesses de rotation les plus élevées de la première plage de vitesses de rotation du fourreau 33. Ainsi, sur la deuxième plage de vitesses de rotation du fourreau 33, la patte 40 est en contact avec le disque 42 du rouet 43 à la fois au niveau de la première zone de contact A et au niveau de la deuxième zone de contact B. La deuxième plage de vitesses de rotation du fourreau 33 comporte par exemple vitesses de rotation entre 12000 et 25000 tours/min.

L'embase 45 comprend une troisième zone de contact C disposée au niveau du sommet 46 de l'embase 45 et destinée à venir en contact avec le disque 42 du rouet 43, lorsque le fourreau 33 est en rotation autour de l'axe 32 de la turbomachine et se déforme radialement par rapport audit axe. Une telle déformation radiale du fourreau 33 intervient lorsque le fourreau 33 atteint une vitesse de rotation critique et se met à vibrer ou en cas de fort balourd, de résonnance ou de rupture d'une patte 40. Plus précisément, la troisième zone de contact C est destinée à venir en contact avec la face interne de la portée annulaire 44 du disque 42 du rouet 43.

Dès lors que le fourreau 33 est animé d'un mouvement de rotation autour de l'axe 32 de la turbomachine, la partie de contact 47 se déforme élastiquement, l'extrémité libre 48 de la patte 40 se lève en direction du disque 42 du rouet 43 sous l'effet de la rotation du fourreau 33 et la première zone de contact A de la partie de contact 47 vient en contact avec le disque 42 du rouet 43. Le contact entre la première zone de contact A et le disque 42 du rouet 43 a pour effet d'augmenter une valeur des vitesses de rotation critiques du fourreau 33. Les vitesses de rotation critiques du fourreau 33 correspondent à des vitesses de rotation auxquelles le fourreau 33 entre en résonance et se met à vibrer.

Lorsque la vitesse de rotation du fourreau 33 augmente et arrive dans la deuxième plage de vitesses de rotation du fourreau 33, la partie de contact 47 se déforme davantage jusqu'à ce que la zone de contact B vienne également en contact avec le disque 42 du rouet 43. L'ajout du contact entre la deuxième zone de contact B et le disque 42 du rouet 43 a pour effet d'augmenter davantage une valeur des vitesses de rotation critiques du fourreau 33.

Enfin, si les contacts entre les première et deuxième zones de contact A et B de la patte 40 et le disque 42 du rouet 43 ne suffisent pas à augmenter la valeur des vitesses de rotation critiques du fourreau 33 de telle sorte qu'elles soient déplacées hors d'une plage de fonctionnement de la turbomachine 30, et que le fourreau 33 entre en résonance et se met à vibrer, la patte 40 entraînée par les déformations radiales du fourreau 33 se déplace vers le disque 42 du rouet 43 et la troisième zone de contact C de l'embase 45 vient au contact du disque 42 du rouet 43. Le contact entre la troisième zone de contact C et le disque 42 du rouet 43 a pour effet de limiter les déformations radiales du fourreau 33 et donc d'en inhiber les vibrations.

De plus, si la partie de contact 47 vient à se rompre, et que le fourreau 33 entre en résonance et se met à vibrer, les déformations radiales du fourreau 33 par rapport à l'axe 32 de la turbomachine sont également limitées par l'embase 45 de la patte 40.

Ainsi, la patte 40 est configurée pour venir en contact avec le disque 42 du rouet 43, lorsque le fourreau 33 est en rotation autour de l'axe 32 de la turbomachine. Plus précisément, la patte 40 est configurée pour ne venir en contact avec le disque 42 du rouet 43 que lorsque le fourreau 33 est en rotation autour de l'axe 32 de la turbomachine. En d'autres termes, la patte 40 n'est pas en contact avec le disque 42 du rouet 43, lorsque le fourreau 33 est à l'arrêt, et la patte 40 est en contact avec le disque 42 du rouet 43, lorsque le fourreau 33 est animé d'un mouvement de rotation autour de l'axe 32 de la turbomachine.

Dans l'exemple présenté à la figure 4, la surface externe 50 de la partie de contact 47 comprend une couche protectrice destinée à protéger la patte 40 des frottements engendrés lors des contacts entre les première, deuxième et troisième zones de contact A, B et C et le disque 42 du rouet 43.

En variante, la patte 40 est disposée en regard d'un des disques 54 du compresseur haute pression 36 ou du disque 55 de la turbine haute pression 39, et est configurée pour venir en contact avec le disque 54 ou 55 en regard duquel elle s'étend. Le disque 54 ou 55 avec lequel la patte 40 vient en contact peut également comporter une portée annulaire similaire à la portée annulaire 44 du disque 42 du rouet 43.

## Revendications

1. Turbomachine (30) comprenant
- un étage de compresseur et un étage de turbine, chaque étage comprenant au moins un disque (42) mobile en rotation autour d'un axe (32) de la turbomachine, et
- un fourreau (33) d'arbre (31) tubulaire s'étendant autour de l'arbre selon l'axe (32) de la turbomachine,
la turbomachine étant **caractérisée en ce que** le fourreau (33) comporte au moins une patte (40) s'étendant depuis une surface radiale externe (41) du fourreau et en regard du disque (42) de l'étage de compresseur ou de l'étage de turbine, la patte (40) étant configurée pour ne venir en contact avec le disque (42) que lorsque le fourreau (33) est en rotation autour de l'axe (32) de la turbomachine.

2. Turbomachine (30) selon la revendication 1, dans laquelle la patte (40) comprend une embase (45) s'étendant sensiblement radialement depuis la surface radiale externe (41) du fourreau et une partie de contact (47) s'étendant depuis l'embase (45) vers une extrémité libre (48) de la patte, la partie de contact (47) étant configurée pour se déformer élastiquement et venir en contact avec le disque (42) lorsque le fourreau (33) est en rotation autour de l'axe (32) de la turbomachine.

3. Turbomachine (30) selon la revendication 2, dans laquelle la partie de contact (47) est localement amincie dans une zone adjacente avec l'embase (45), dans laquelle la partie de contact (47) comprend une surface externe (50) s'étendant en regard du disque (42) et formant, au niveau de l'extrémité libre (48) de la patte (40), une première zone de contact (A) destinée à venir en contact avec le disque (42) sur une première plage de vitesses de rotation du fourreau (33), et dans laquelle la surface externe (50) de la partie de contact (47) comprend une première portion de surface (51) définie par la première zone de contact (A), et une deuxième portion de surface (52), s'étendant dans le prolongement de la première portion de surface et étant décalée radialement vers le disque (42) de manière à définir un sommet (53), ledit sommet formant une deuxième zone de contact (B) destinée à venir en contact avec le disque (42) sur une deuxième plage de vitesses de rotation du fourreau.

4. Turbomachine (30) selon la revendication 3, dans laquelle la surface externe (50) de la patte (40) comprend une couche protectrice.

5. Turbomachine (30) selon l'une des revendications 1 à 4, dans laquelle la patte (40) comprend une embase (45) s'étendant sensiblement radialement depuis la surface radiale externe (41) du fourreau (33), l'embase étant configurée pour venir en contact avec le disque (42) lorsque le fourreau (33) est en rotation autour de l'axe (32) et se déforme radialement par rapport audit axe.

6. Turbomachine (30) selon l'une des revendications 2 à 5, dans laquelle la partie de contact (47) s'étend sensiblement tangentiellement par rapport au fourreau (33).

7. Turbomachine (30) selon l'une des revendications 2 à 5, dans laquelle la partie de contact (47) s'étend parallèlement à l'axe (32) de la turbomachine.

8. Turbomachine (30) selon l'une des revendications 1 à 7, dans laquelle le fourreau (33) comporte un premier tube (34) dont une extrémité coopère avec une extrémité d'un deuxième tube (37), la patte (40) s'étendant à l'extrémité du premier tube (34), depuis une surface radiale externe (41) dudit premier tube.

9. Turbomachine (30) selon l'une des revendications 1 à 8, dans laquelle le disque (42) comporte une portée (44), la patte (40) du fourreau (33) étant configurée pour venir en contact avec la portée, lorsque le fourreau (33) est en rotation autour de l'axe (32).

10. Tube de fourreau (33) d'arbre (31) de turbomachine (30) s'étendant selon un axe (32), le fourreau étant **caractérisé en ce qu'**il comporte au moins une patte (40) s'étendant depuis une surface radiale externe (41) du tube, et **en ce que** la patte (40) est configurée pour ne venir en contact avec un disque (42) d'un étage de compresseur ou de turbine d'une turbomachine, que lorsque le fourreau (33) est en rotation autour de l'axe (32).

## Patentansprüche

1. Turbomaschine (30), umfassend
- eine Kompressorstufe und eine Turbinenstufe, wobei jede Stufe mindestens eine um eine Achse (32) der Turbomaschine drehbewegliche Scheibe (42) umfasst, und
- eine rohrförmige Muffe (33) einer Welle (31), die sich entlang der Achse (32) der Turbomaschine um die Welle erstreckt,
wobei die Turbomaschine **dadurch gekennzeichnet ist, dass** die Muffe (33) mindestens eine Lasche (40) beinhaltet, die sich aus einer äußeren radialen Oberfläche (41) der Muffe, und gegenüber der Scheibe (42) der Kompressorstufe oder der Turbinenstufe erstreckt, wobei die Lasche (40) konfiguriert ist, um nur dann mit der Scheibe (42) in Kontakt zu kommen, wenn sich die Muffe (33) um die Achse (32) der Turbomaschine dreht.

2. Turbomaschine (30) nach Anspruch 1, wobei die Lasche (40) eine Basis (45) umfasst, die sich um Wesentlichen radial aus der äußeren radialen Oberfläche (41) der Muffe erstreckt, und ein Kontaktteil (47), das sich aus der Basis (45) zu einem freien Ende (48) der Lasche erstreckt, wobei das Kontaktteil (47) konfiguriert ist, um sich elastisch zu verformen, und mit der Scheibe (42) in Kontakt zu kommen, wenn sich die Muffe (33) um die Achse (32) der Turbomaschine dreht.

3. Turbomaschine (30) nach Anspruch 2, wobei das Kontaktteil (47) in einer an die Basis (45) angrenzenden Zone lokal verjüngt ist, in der das Kontaktteil (47) eine äußere Oberfläche (50) umfasst, die sich gegenüber der Scheibe (42) erstreckt und im Bereich des freien Endes (48) der Lasche (40) eine erste Kontaktzone (A) bildet, die dazu bestimmt ist, in einem ersten Drehzahlspektrum der Muffe (33) mit der Scheibe (42) in Kontakt zu kommen, und wobei die äußere Oberfläche (50) des Kontaktteils (47) einen ersten Oberflächenabschnitt (51) umfasst, der durch die erste Kontaktzone (A) definiert ist, und einen zweiten Oberflächenabschnitt (52), der sich in der Verlängerung des ersten Oberflächenabschnitts erstreckt, und radial zur Scheibe (42) versetzt ist, um einen Scheitel (53) zu definieren, wobei der Scheitel eine zweite Kontaktzone (B) bildet, die dazu bestimmt ist, in einem zweiten Drehzahlspektrum der Muffe mit der Scheibe (42) in Kontakt zu kommen.

4. Turbomaschine (30) nach Anspruch 3, wobei die äußere Oberfläche (50) der Lasche (40) eine Schutzschicht umfasst.

5. Turbomaschine (30) nach einem der Ansprüche 1 bis 4, wobei die Lasche (40) eine Basis (45) umfasst, die sich im Wesentlichen radial aus der äußeren radialen Oberfläche (41) der Muffe (33) erstreckt, wobei die Basis konfiguriert ist, um mit der Scheibe (42) in Kontakt zu kommen, wenn sich die Muffe (33) um die Achse (32) dreht, und sich in Bezug auf die Achse radial verformt.

6. Turbomaschine (30) nach einem der Ansprüche 2 bis 5, wobei sich das Kontaktteil (47) im Wesentlichen in Bezug auf die Muffe (33) tangential erstreckt.

7. Turbomaschine (30) nach einem der Ansprüche 2 bis 5, wobei sich das Kontaktteil (47) parallel zur Achse (32) der Turbomaschine erstreckt.

8. Turbomaschine (30) nach einem der Ansprüche 1 bis 7, wobei die Muffe (33) ein erstes Rohr (34) beinhaltet, von dem ein Ende mit einem Ende eines zweiten Rohres (37) zusammenwirkt, wobei sich die Lasche (40) von einer äußeren radialen Oberfläche (41) des ersten Rohres am Ende des ersten Rohres (34) erstreckt.

9. Turbomaschine (30) nach einem der Ansprüche 1 bis 8, wobei die Scheibe (42) eine Auflagefläche (44) beinhaltet, wobei die Lasche (40) der Muffe (33) konfiguriert ist, um mit der Auflagefläche in Kontakt zu kommen, wenn sich die Muffe (33) um die Achse (32) dreht.

10. Muffenrohr (33) einer Welle (31) einer Turbomaschine (30), das sich entlang einer Achse (32) erstreckt, wobei die Muffe **dadurch gekennzeichnet ist, dass** sie mindestens eine Lasche (40) beinhaltet, die sich aus einer äußeren radialen Oberfläche (41) des Rohres erstreckt, und dadurch, dass die Lasche (40) konfiguriert ist, um nur dann mit einer Scheibe (42) einer Kompressor- oder Turbostufe einer Turbomaschine in Kontakt zu kommen, wenn sich die Muffe (33) um die Achse (32) dreht.

## Claims

1. A turbine engine (30) comprising
- a compressor stage and a turbine stage, each stage comprising at least one disk (42) rotatably movable about an axis (32) of the turbine engine, and
- a tubular shaft (31) sleeve (33) extending around the shaft along the axis (32) of the turbine engine,
the turbine engine being **characterized in that** the sleeve (33) includes at least one tab (40) extending from an outer radial surface (41) of the sleeve and facing the disk (42) of the compressor stage or the turbine stage, the tab (40) being configured to come into contact with the disk (42) when the sleeve (33) is in rotation about the axis (32) of the turbine engine.

2. The turbine engine (30) according to Claim 1, wherein the tab (40) comprises a base (45) extending substantially radially from the outer radial surface (41) of the sleeve and a contact portion (47) extending from the base (45) toward a free end (48) of the tab, the contact portion (47) being configured to deform elastically and come into contact with the disk (42) when the sleeve (33) is in rotation about the axis (32) of the turbine engine.

3. The turbine engine (30) according to Claim 2, wherein the contact portion (47) is locally thinned in an area adjoining the base (45), wherein the contact portion (47) comprises an outer surface (50) extending facing the disk (42) and forming, at the free end (48) of the tab (40), a first contact area (A) designed to come into contact with the disk (42) over a first range of rotation speeds of the sleeve (33), and wherein the outer surface (50) of the contact portion (47) comprises a first surface portion (51) defined by the first contact area (A), and a second surface portion (52) extending in the prolongation of the first surface portion and being radially offset toward the disk (42) so as to define a peak (53), said peak forming a second contact area (B) designed to come into contact with the disk (42) over a second range of rotation speeds of the sleeve.

4. The turbine engine (30) according to Claim 3, wherein the outer surface (50) of the tab (40) comprises a protective coating.

5. The turbine engine (30) according to one of Claims 1 to 4, wherein the tab (40) comprises a base (45) extending substantially radially from the outer radial surface (41) of the sleeve (33), the base being configured to come into contact with the disk (42) when the sleeve (33) is in rotation about the axis (32) and deforms radially with respect to said axis.

6. The turbine engine (30) according to one of Claims 2 to 5, wherein the contact portion (47) extends substantially tangentially with respect to the sleeve (33).

7. The turbine engine (30) according to one of Claims 2 to 5, wherein the contact portion (47) extends parallel to the axis (32) of the turbine engine.

8. The turbine engine (30) according to one of Claims 1 to 7, wherein the sleeve (33) includes a first tube (34) of which one end cooperates with one end of a second tube (37), the tab (40) extending to the end of the first tube (34) from an outer radial surface (41) of said first tube.

9. The turbine engine (30) according to one of Claims 1 to 8, wherein the disk (42) includes a step (44), the tab (40) of the sleeve (33) being configured to come into contact with the step, when the sleeve (33) is in rotation about the axis (32).

10. A tube of the shaft (31) sleeve (33) of a turbine engine (30) extending along an axis (32), the sleeve being **characterized in that** it includes at least one tab (40) extending from an outer radial surface (41) of the tube, and **in that** the tab (40) is configured to come into contact with a disk (42) of a compressor or turbine stage of a turbine engine, when the sleeve (33) is in rotation about the axis (32).
